# FASCICULE DE BREVET EUROPEEN

(11) **EP 2 812 169 B1**
(45) Date de publication et mention de la délivrance du brevet: **06.01.2016**
(21) Numéro de dépôt: 13706636.1
(22) Date de dépôt: 05.02.2013
(51) Int. Cl.: B29C 45/14, B29L 31/44, A47B 77/06, E03C 1/18, E03C 1/33

(54) **PROCÉDÉ DE RÉALISATION D'UN ENSEMBLE PLAN-VASQUE ET ENSEMBLE PLAN-VASQUE OBTENU PAR CE PROCÉDÉ**
VERFAHREN ZUR HERSTELLUNG EINER WASCHTISCHEINHEIT UND DADURCH HERGESTELLTE WASCHTISCHEINHEIT
METHOD FOR PRODUCING A VANITY UNIT ASSEMBLY AND VANITY UNIT ASSEMBLY OBTAINED BY THIS METHOD

(30) Priorité: 07.02.2012 FR 1200358
(43) Date de publication de la demande: 17.12.2014
(73) Titulaire: CHENE VERT, 81000 Albi (FR)
(72) Inventeur: GALINIER, Benoît, F-81000 Albi (FR)
(74) Mandataire: Cabinet BARRE LAFORGUE & associés
(86) Numéro de dépôt international: PCT/FR2013/050241
(87) Numéro de publication internationale: WO 2013/117855

(56) Documents cités:
- EP-A1- 1 114 715
- EP-A2- 2 338 672
- FR-A1- 2 962 459
- JP-A- 53 077 760
- JP-A- 53 143 470
- JP-A- 54 150 483
- US-A- 6 000 673
- US-A1- 2010 175 182

## Description

L'invention concerne un procédé de réalisation d'un ensemble monobloc plan-vasque comportant une vasque intégrée à un plan récepteur, en particulier un plan sanitaire ou un plan de travail de salle de bains ou de cuisine. L'invention s'étend également à un ensemble plan-vasque obtenu par ce procédé.

Les meubles de salle de bains ou de cuisine possèdent un panneau supérieur formant un plan sanitaire ou de travail, appelé dans la suite de la description plan récepteur, dans lequel est encastrée une vasque, généralement vasque d'évier ou de lavabo. Ce plan récepteur peut être constitué d'un matériau support tel que du bois aggloméré par exemple, habillé d'un revêtement tel qu'une couche mince de matériau stratifié dans lequel on perce une ouverture ou découpe pour faire place à la vasque.

Il existe diverses techniques propres à permettre l'intégration d'une vasque à un tel plan récepteur, en particulier lorsque la vasque doit être montée en affleurement à la face supérieure du plan récepteur.

En vue de rendre la description plus claire, on supposera dans toute la suite le plan récepteur et la vasque dans leur position normale de service, les termes « haut », « bas », « supérieur », « inférieur » se référant à cette position sans préjuger de la position réelle du plan récepteur et de la vasque au cours des étapes du procédé de fabrication.

On connaît par exemple du brevet EP 1 076 740 une technique d'intégration de la vasque dans le plan récepteur par ajustement manuel et collage de la vasque sur le plan.

Pour éviter toutes les opérations manuelles d'ajustement et les temps d'attente nécessaires dans ce procédé, la demande de brevet français FR 2 962 459 propose un procédé dans lequel la vasque est surmoulée sur le chant de la découpe dans un moule adapté pour réaliser l'affleurement de la vasque à la face supérieure du plan récepteur.

Ce procédé, s'il permet une économie considérable pour la réalisation d'une vasque affleurant au plan récepteur, présente l'inconvénient d'imposer une couleur de vasque unie (couleur du matériau synthétique thermoplastique injecté). Par ailleurs, pour obtenir certaines caractéristiques de surface de la vasque telle que résistance à la rayure, à l'abrasion et aux produits chimiques, il est nécessaire d'utiliser des matériaux coûteux et/ou difficiles à mettre en oeuvre.

La présente invention se propose de pallier les inconvénients de la technique antérieure connue évoquée ci-dessus, en permettant d'obtenir des ensembles plan-vasque comportant une vasque affleurant la face supérieure du plan récepteur et présentant des caractéristiques esthétiques ou techniques de surface difficile voire impossible à obtenir par les procédés de la technique antérieure.

Pour ce faire, l'invention concerne un procédé de réalisation d'un ensemble plan-vasque, dans lequel :
- on réalise une découpe dans un plan récepteur comportant une couche épaisse d'un matériau support recouvert sur au moins une face d'une couche mince de matériau stratifié, dite couche stratifiée, ladite découpe s'opérant dans le matériau support suivant un contour d'une vasque et laissant subsister un liséré de couche stratifiée en surplomb vers l'intérieur de la découpe,
- on utilise un moule d'injection comportant deux parties de forme complémentaire, une première partie, dite coquille concave, comportant au moins une partie en creux propre à former une surface externe convexe de la vasque et une seconde partie, dite coquille convexe propre à former une surface interne concave de la vasque, ledit moule étant adapté pour recevoir et serrer le plan récepteur entre les deux coquilles, la couche stratifiée du plan récepteur en regard de la coquille convexe,
caractérisé en ce que :
- on réalise, à partir d'une feuille mince de matériau(x) synthétique(s) thermoplastique(s), dit film décor, une préforme de la vasque comportant un rebord plan le long de son contour, vers l'extérieur de la préforme, ledit rebord présentant une largeur inférieure à la largeur du liséré de couche stratifiée,
- on installe la préforme et le plan récepteur dans le moule en respectant l'ordre suivant : coquille concave, préforme, plan récepteur, coquille convexe, de façon à ce que la préforme soit insérée dans la découpe ménagée dans le matériau support et que le rebord plan de la préforme vienne au contact du liséré de couche stratifiée,
- on referme le moule et on injecte un second matériau synthétique thermoplastique, dit matériau injecté, entre la coquille concave et la préforme.

Lors de l'injection du second matériau thermoplastique, par exemple de l'acrylonitrile butadiène styrène ou ABS, entre la coquille concave et la préforme, cette dernière est amollie par la température du matériau injecté et plaquée contre la coquille convexe par la pression d'injection. La préforme prend alors la forme exacte de la coquille convexe. De plus, le rebord de la préforme vient au contact du liseré de couche stratifiée et se déforme, pour la partie du rebord non recouverte par le liseré, en direction de la coquille convexe pour venir affleurer le niveau supérieur du plan récepteur. Il est ainsi possible, même avec une préforme approximative, d'obtenir la forme exacte recherchée de l'intérieur de la vasque ainsi qu'un affleurement parfait du rebord de la vasque avec la couche stratifiée. La préforme utilisée permet ainsi, en fonction du choix du matériau du film décor, d'obtenir un décor et/ou des caractéristiques mécaniques de surface qu'il ne serait pas aisé d'obtenir par la seule injection du second matériau thermoplastique.

Avantageusement et selon l'invention, on emploie un film décor constitué d'une feuille comportant au moins deux couches de matériaux synthétiques thermoplastiques dont au moins une première couche est constituée d'un matériau transparent. De manière préférentielle, le film décor comporte une première couche d'un matériau transparent tel que le (poly)méthacrylate de méthyle (PMMA), d'une épaisseur comprise entre 0,05 mm et 0,1 mm, préférentiellement 0,07 mm. Le méthacrylate de méthyle particulièrement sous sa forme de film extrudé et/ou calandré présente des propriétés de résistance à la rayure et à l'abrasion particulièrement appropriées à la réalisation de vasques. La couche de méthacrylate de méthyle peut également recevoir un traitement de surface spécifique lui permettant de résister aux principales agressions chimiques une vasque peut subir en usage.

Avantageusement et selon l'invention, on emploie un film décor comportant une deuxième couche de matériau synthétique thermoplastique, de caractéristiques compatibles avec le matériau injecté. En particulier, la deuxième couche de matériau synthétique thermoplastique, d'une épaisseur comprise entre 0,5 mm et 1 mm et préférentiellement 0,6 mm, est choisie pour assurer, pendant l'injection, une compatibilité des températures entre le matériau injecté et le film décor permettant une déformation contrôlée de ce dernier et, après injection, une excellente cohésion entre le matériau injecté et le film. Par exemple, pour un matériau injecté tel que l'ABS, le PETG ou le PMMA, le choix d'une deuxième couche en ABS dont la température de fusion et/ou de transition vitreuse est voisine de celles des matériaux précités est un bon compromis entre la facilité de thermoformage du film décor et sa tenue lors du moulage de la vasque. Cette deuxième couche de matériau synthétique thermoplastique est assemblée par tous moyens connus, par exemple par co-laminage ou par collage, à la première couche pour former le film décor.

Avantageusement et selon l'invention, la première couche du film décor comporte un décor pré imprimé sur sa face en regard de la deuxième couche. Il est ainsi possible d'obtenir un film décor comportant un décor protégé par la première couche transparente sur le côté visible du film décor, et par la deuxième couche dont la fonction est d'empêcher la migration de la matière thermoplastique injectée vers le décor pendant le processus d'injection plastique afin d'éviter la détérioration du décor. On peut ainsi obtenir une vasque présentant des coloris ou des décors variés qui ne pourraient pas être obtenus simplement par l'injection d'un matériau thermoplastique.

Avantageusement et selon l'invention, la préforme est réalisée par thermoformage d'un film décor d'une épaisseur comprise entre 0,5 mm et 1,5 mm. En utilisant un film décor d'une épaisseur sensiblement équivalente à l'épaisseur de la couche stratifiée, comprenant par exemple une couche de PMMA transparent de 0,07 mm et une couche d'ABS de 0,6 mm, on réalise un bon compromis entre la facilité de thermoformage, la résistance à la perforation lors de l'injection du second matériau synthétique thermoplastique et l'ajustement du rebord de la préforme sur le liseré de couche stratifiée.

Avantageusement et selon l'invention, le thermoformage de la préforme est réalisé dans le moule d'injection, avant installation du plan récepteur. Il est possible en effet de réaliser le thermoformage du film décor directement dans le moule d'injection, par exemple par aspiration dans la coquille concave après l'avoir préchauffé par exemple par rayonnement infrarouge. Ainsi, la préforme peut être réalisé dans les mêmes outillages qui serviront ultérieurement à l'injection. Même si la préforme présente une différence de forme par rapport à la face supérieure de la vasque qu'elle doit former, sa malléabilité sous l'effet de la pression et de la température du second matériau synthétique thermoplastique injecté permet de la plaquer étroitement sur la coquille convexe lors de l'étape d'injection.

Avantageusement et selon un mode de réalisation préférentielle de l'invention, le thermoformage est réalisé sur une machine de thermoformage spécialisée et la préforme est ensuite introduite dans le moule d'injection entre la coquille concave et le plan récepteur. Dans cette version préférée du procédé selon l'invention, la préforme est réalisée sur une machine de thermoformage distincte du moule d'injection. Ce procédé est plus économique du fait de la réalisation des préformes en temps masqué, sur une machine spécialisée permettant d'obtenir des tolérances de fabrication plus performantes.

Avantageusement et selon l'invention, le rebord de la préforme comporte des languettes radiales s'étendant dans le plan du rebord, régulièrement réparties sur le contour de la préforme, et de longueur adaptée pour venir au contact du chant de la découpe du plan récepteur. De préférence, leur longueur est sensiblement égale à la moitié de la largeur du liseré de la couche stratifiée du plan récepteur. Grâce à ces languettes, le centrage de la préforme dans la découpe est facilité. De plus, elles permettent de régler le recouvrement entre le liséré de la couche stratifiée et le rebord de la préforme de manière à ménager une zone non recouverte permettant lors de l'injection de réaliser une zone de contact direct entre le matériau injecté et le liseré afin d'améliorer l'étanchéité entre la vasque et le plan récepteur. De préférence, les languettes sont de forme triangulaire de manière à minimiser les discontinuités de cette zone de contact direct.

Avantageusement et selon l'invention, on réalise la découpe dans le plan récepteur de manière à ce que le chant de la découpe présente une inclinaison de cinq à quinze degrés et préférentiellement de dix degrés vers l'extérieur du contour en partant de la couche stratifiée. Cette inclinaison du chant de la découpe permet d'engager sans difficulté la préforme dans le plan récepteur et de former une jupe périphérique le long de la découpe assurant la tenue de la vasque sur celle-ci.

Avantageusement et selon l'invention, la découpe laisse subsister un liséré de couche stratifié présentant une largeur de trois à dix millimètres et préférentiellement de cinq millimètres. La largeur du liseré de couche stratifiée est adaptée pour permettre un recouvrement du rebord de la préforme suffisant pour empêcher, lors de l'étape d'injection, toute fuite du second matériau synthétique thermoplastique entre le rebord de la préforme et le liseré de couche stratifiée tout en conservant une bande de contact du second matériau synthétique thermoplastique avec le liseré de couche stratifiée sur toute la périphérie de la vasque afin de garantir l'étanchéité entre celle-ci et le plan récepteur.

Avantageusement et selon l'invention, la découpe réalisée dans le plan récepteur présente une profondeur adaptée pour éliminer toute trace de matériau support sur le liséré de couche stratifiée. De cette manière, le rebord de la préforme vient en contact étroit avec la couche stratifiée sans interposition de particules du matériau support, permettant ainsi de réaliser une bonne étanchéité entre la préforme et le liseré de couche stratifiée.

Avantageusement et selon l'invention, on réalise, après l'opération de découpe, une opération d'application d'un produit d'étanchéité sur le liseré de la couche stratifiée et le chant de la découpe. De préférence, le produit d'étanchéité est une composition permettant un collage du rebord de la préforme sur le liseré de la couche stratifiée. Cette opération permet encore d'améliorer l'étanchéité entre le plan récepteur et la vasque.

Par ailleurs, à l'issue de l'étape de découpe et avant projection du produit d'étanchéité, on réalise une opération de soufflage et dépoussiérage du plan récepteur. En faisant passer à l'issue de la découpe les plans récepteurs dans une cabine de soufflage et d'aspiration des poussières, on évite toute contamination des opérations ultérieures par les résidus de découpe.

Avantageusement et selon l'invention, on installe la préforme dans la coquille concave, on installe le plan récepteur au-dessus de la préforme et lors de la fermeture du moule d'injection, on plaque la préforme sur la coquille convexe par aspiration au travers de canaux d'aspiration ménagés dans la coquille convexe et on maintient cette aspiration pendant l'injection du matériau thermoplastique entre la préforme et la coquille concave. Lors de l'installation de la préforme dans le moule d'injection, il est nécessaire de la placer dans la coquille concave pour la recouvrir par le plan récepteur avant de refermer le moule de manière à ce que le rebord de la préforme soit placé au-dessous du liseré de la couche stratifiée. L'aspiration réalisée par les canaux d'aspiration de la coquille convexe permet de plaquer le rebord de la préforme sur le liseré.

Avantageusement, dans une variante du procédé selon l'invention, la préforme est fixée sur le plan récepteur avant installation de celui-ci dans le moule. Cette fixation peut être réalisée simplement par insertion en force des languettes ménagées sur le contour du rebord de la préforme dans la découpe ou, alternativement ou en combinaison, par collage du rebord de la préforme sur la partie intérieure du liséré du plan récepteur. Dans cette variante du procédé selon l'invention, on profite de la manutention du plan récepteur pour installer directement la préforme dans la découpe de celui-ci, en contact avec le liseré de couche stratifiée et le cas échéant pour la coller par quelques points de colle directement sur le liseré. Cette variante permet ainsi de se dispenser de réaliser une aspiration complexe dans la coquille convexe.

L'invention s'étend également à un ensemble monobloc, dit plan-vasque, comprenant :
- un plan récepteur comportant une couche épaisse d'un matériau support recouvert sur au moins une face d'une couche mince de matériau stratifié, dite couche stratifiée ;
- une vasque surmoulée sur le chant d'une découpe ménagée dans le plan récepteur,
caractérisé en ce que ladite vasque comporte au moins une première couche superficielle, dite préforme, d'au moins un premier matériau synthétique thermoplastique affleurant la couche stratifiée du plan récepteur, et une seconde couche, dite couche injectée, d'un second matériau synthétique thermoplastique supportant la préforme et ancrée dans le chant de la découpe du plan récepteur.

Un tel ensemble monobloc comportant une vasque présentant une « peau » superficielle permet de proposer une vasque décorée affleurant au plan récepteur avec des propriétés de robustesse et d'esthétique inégalées à un cout raisonnable.

L'invention concerne également un procédé de réalisation d'un ensemble plan-vasque et un ensemble plan-vasque caractérisés en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 représente une coupe du plan récepteur après usinage de la découpe,
- la figure 2 représente schématiquement le thermoformage du film décor pour obtenir la préforme,
- la figure 3 est une vue de dessus schématique de la préforme selon l'invention,
- la figure 4 montre l'installation du plan récepteur et de la préforme dans le moule d'injection, et
- la figure 5 est une vue de détail en coupe de l'ensemble plan vasque à la jonction de la vasque et du plan récepteur.
- la figure 6 représente un organigramme d'une variante préférentielle du procédé selon l'invention, et
- la figure 7 représente une vue en coupe perspective d'un film décor utilisé dans le procédé selon l'invention.

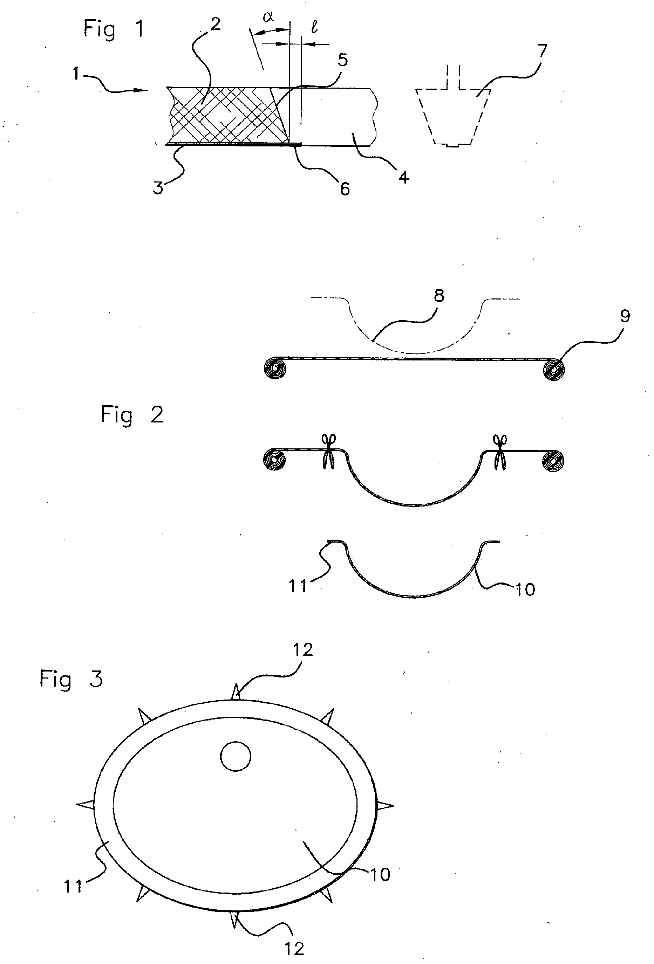

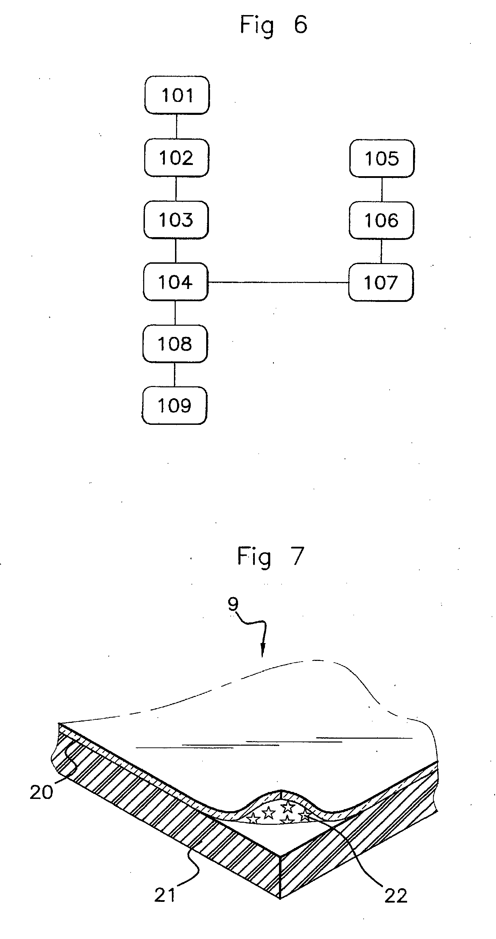

On se réfère à la figure 6 pour décrire de manière générale le procédé de réalisation d'un ensemble plan-vasque selon l'invention :
Dans une première étape 101, dont le résultat est détaillé à la figure 1, on réalise une découpe du contour d'une vasque 18 dans un plan récepteur 1 ainsi que, le cas échéant, d'autres découpes telles que le passage des robinets etc. Le plan récepteur 1 est constitué d'un matériau support 2, par exemple un panneau de bois aggloméré, recouvert d'une couche 3 mince de matériau stratifié. Au cours de l'étape 101, le plan récepteur est bridé sur une machine à commande numérique, couche 3 stratifiée dessous, de manière à permettre la réalisation d'une découpe 4 au moyen d'une fraise 7. La fraise 7 est choisie de manière à permettre une découpe de toute l'épaisseur du matériau support 2 en laissant subsister un liseré 6 de la couche 3 stratifiée. Le chant 5 de la découpe présente une inclinaison α de 5 à 15° par rapport à la verticale de manière à former une découpe évasée à l'opposé du liseré 6. De manière préférentielle, l'inclinaison du chant de la découpe est de 10° vers l'extérieur du contour en partant de la couche 3 stratifiée, cette valeur d'inclinaison étant optimale pour la tenue de la vasque surmoulée. Avantageusement, le liseré 6 de couche 3 stratifiée présente une largeur ℓ de 3 à 10 mm, et préférentiellement de 5 mm. Le déplacement de la fraise 7 est contrôlé en profondeur de manière à éliminer toute trace de matériau support 2 sur le liseré 6 de couche stratifiée.

L'étape suivante 102 consiste en un dépoussiérage du plan récepteur usiné dans une cabine de soufflage/aspiration.

À l'étape 103, on réalise une application, par pulvérisation par exemple, d'un produit d'étanchéité sur le chant 5 de la découpe 4, et plus particulièrement sur la partie du chant rejoignant le liseré 6 ainsi que sur le liseré lui-même. Ce produit d'étanchéité peut être par exemple une composition collante de type époxy ou polyuréthane adaptée pour conserver des propriétés d'adhésivité jusqu'à polymérisation en température afin de permettre, dans une opération ultérieure, le collage du rebord de la préforme sur le liseré 6. On peut également utiliser une application d'une fine couche de colle fusible, soit directement appliquée en température, soit sous forme d'une dispersion de particules de colle fusible dans un liant. On choisit de préférence une température de polymérisation (ou de fusion dans le cas d'une colle fusible) du même ordre que la température atteinte lors de l'injection, c'est-à-dire de l'ordre de 230°C, afin que cette couche de colle assure l'étanchéité entre le plan récepteur et la vasque surmoulée.

Parallèlement aux étapes de préparation du plan récepteur, on réalise à l'étape 105 le thermoformage d'une préforme 10 de la vasque à partir d'une feuille multicouche de matériaux thermoplastiques synthétiques ou film décor 9. Cette étape de thermoformage est schématiquement représentée à la figure 2 et la structure du film décor 9 employé est représentée à la figure 7.

Le film décor 9 est constitué d'une première couche 20 de matériau synthétique transparent tel que le PMMA (poly méthacrylate de méthyle) de très faible épaisseur, par exemple comprise entre 0,05 mm et 0,1 mm, préférentiellement 0,07 mm. Cette première couche 20 est assemblée à une deuxième couche 21 d'un second matériau synthétique thermoplastique, d'une épaisseur comprise entre 0,5 mm et 1 mm, préférentiellement 0,6 mm par collage, co-laminage ou tout autre procédé à la portée de l'homme du métier. La première couche 20 comporte sur sa face en contact avec la deuxième couche 21 un décor 22 pré imprimé. De tels films décor sont commercialisés par exemple par la société PROTECHNIC sous la marque HELIOPLAST ou par la société japonaise NISSHA.

Avantageusement, le choix du matériau de la deuxième couche 21 est réalisé en fonction de sa compatibilité avec le matériau thermoplastique prévu pour l'injection de la vasque. Ainsi, si le matériau choisi pour l'injection est l'ABS par exemple, on choisira de l'ABS pour la deuxième couche 21. De même, pour un matériau injecté tel que le PMMA ou le PETG, dont les températures de fusion sont de l'ordre de 200°C à 250°C, on a pu constater que la deuxième couche 21 en ABS permettait la déformation du film décor 9 sans dégradation du décor 22 (pas de percement de la couche 21).

À l'étape 105, on réalise une préforme 10 de la vasque par exemple par drapage d'un film décor 9 en rouleau, préalablement chauffé, autour d'un moule saillant (moule positif) comme représenté à la figure 2, ou bien par aspiration sur un moule en creux (moule négatif). Préférentiellement, on utilise une machine de thermoformage spécialisée qui permet des changements de moule plus rapides et utilise des moules moins onéreux que les presses d'injection. Il est cependant possible d'utiliser les moules destinés à l'injection de la vasque pour réaliser la préforme 10 comme on le verra par la suite. Le film décor 9 est placé de telle sorte que la couche transparente en PMMA soit orientée vers le dessus de la vasque c'est-à-dire qu'elle forme la surface de l'intérieur de celle-ci. La forme du moule de thermoformage est sensiblement identique à la forme intérieure de la vasque pour la partie concave de celle-ci, et comporte des moyens pour former un rebord 11 plan le long du contour de celle-ci et s'étendant vers l'extérieur de la partie concave.

Une fois que le film décor 9 a été thermoformé, la préforme 10 est découpée à l'étape 106 de telle sorte que la largeur du rebord 11 permettre l'insertion de la préforme à l'intérieur de la découpe 4 ménagée dans le plan récepteur 1 de façon à ce que le rebord vienne au contact de la face inférieure du liseré 6 de la couche stratifiée. De préférence, la largeur du rebord 11 est telle qu'une fois la préforme 10 centrée dans la découpe 4, l'extrémité du rebord 11 repose sur le liseré 6 sur une bande d'une largeur d'au moins 2 mm tout en laissant libre et non recouverte une zone périphérique du liseré 6 de l'ordre de 1 à 3 mm.

Avantageusement, lors de la découpe du rebord de la préforme, on ménage des languettes 12 radiales (figure 3) s'étendant dans le plan et vers l'extérieur du rebord 11, régulièrement réparties sur le contour de la préforme 10. Les languettes 12 radiales présentent une forme triangulaire et une longueur adaptée pour au moins venir au contact du chant de la découpe du plan récepteur, par exemple de l'ordre de 0,5 mm de plus que la largeur de la zone périphérique du liseré 6 non recouverte par le rebord 11. Ainsi lors de l'insertion de la préforme 10 dans la découpe 4 du plan récepteur 1, les languettes 12 radiales permettent de centrer la préforme dans la découpe et de la fixer provisoirement dans cette position par arc-boutement.

La préforme 10 ainsi formée et découpée est ensuite stockée à l'étape 107 en attente d'utilisation à l'étape 104.

À l'étape 104, le plan récepteur 1 issu de l'étape 103 d'enduction d'étanchéité, est associé avec une préforme 10 correspondant à la découpe réalisée dans le plan récepteur. Plus particulièrement, le plan récepteur 1 est saisi par un bras manipulateur pour être ultérieurement positionné dans le moule (à l'étape 108). Au cours de cette manipulation, le plan récepteur est présenté à l'opérateur dans une position permettant l'insertion aisée de la préforme dans la découpe, par exemple la face du matériau support du plan récepteur tournée vers l'opérateur. L'opérateur engage alors la préforme 10 dans la découpe dont l'ouverture évasée est face à lui, le rebord 11 de la préforme entrant dans la découpe en premier. Grâce aux languettes 12 radiales, le centrage de la préforme 10 dans la découpe est facilité. La préforme 10 est temporairement fixée dans le plan récepteur par au moins l'un des moyens suivants : i) l'adhésivité de la couche de colle déposée à l'étape 103 ou, dans le cas d'une couche de colle fusible, un chauffage de celle-ci par une rampe à infrarouges par exemple ; ii) les languettes 12 radiales qui peuvent également servir à fixer la préforme dans le plan récepteur en se déformant élastiquement, ou encore par l'opérateur qui peut apposer des points de colle régulièrement répartis sur la périphérie du rebord 11, à cheval sur le rebord et le liseré 6. Une fois la préforme installé dans le plan récepteur 1, le bras manipulateur poursuit sa course pour positionner le plan récepteur dans le moule d'injection à l'étape 108.

Dans une variante du procédé de l'invention, l'étape 104 de montage de la préforme dans le plan récepteur est combinée avec l'étape 108 de chargement du moule. Dans ce cas, l'opérateur insère la préforme 10 dans la coquille concave 14 du moule, où elle est maintenue par une aspiration au travers de canaux d'aspiration ménagée dans la coquille concave. Dans cette variante, il peut être envisagé de profiter des moyens d'aspiration présents sur les coquilles 13 et 14 du moule pour réaliser la préforme 10 en se servant de celles-ci. Par exemple, il est possible de tendre le film décor 9 au-dessus de la coquille concave 14, de le chauffer par exemple au moyen d'une rampe à infrarouge, puis de l'appliquer par aspiration sur la surface de la coquille concave. Une fois le film décor 9 thermoformé dans la coquille concave, il peut être découpé par exemple par un cadre de découpe pressé au-dessus de la coquille concave.

L'opérateur positionne ensuite le plan récepteur 1 au-dessus de la coquille concave 14, la face du matériau support du plan récepteur en regard de la coquille concave. La coquille convexe 13 vient alors refermer le moule en enserrant le plan récepteur 1 entre les deux coquilles. L'aspiration de maintien de la préforme dans la coquille concave est alors arrêtée et une aspiration par des canaux d'aspiration ménagés dans la coquille convexe 13 est alors mise en route. La préforme 10 est ainsi aspirée et plaquée contre la coquille convexe 13, le rebord 11 de la préforme venant au contact du liseré 6 de la couche stratifiée du plan récepteur.

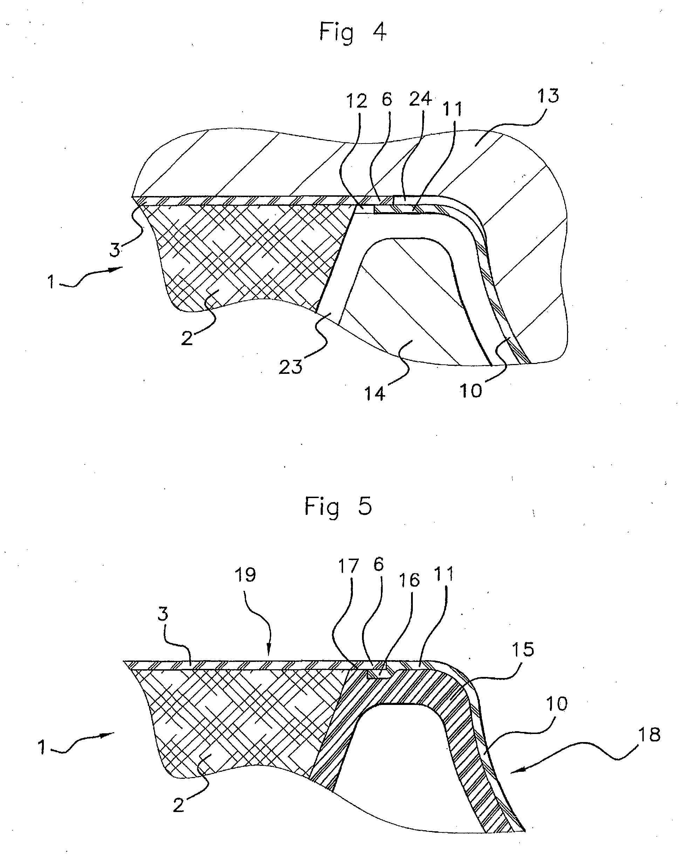

Quelle que soit la variante du procédé, à la fin de l'étape 108 de chargement du moule, le plan récepteur 1 et la préforme 10 se retrouvent dans la position illustrée à la figure 4. La partie concave de la préforme 10 est plaquée contre la coquille convexe 13, le rebord 11 de la préforme est plaqué contre le liseré 6 de la couche 3 avec, le cas échéant, la languette 12 radiale venant en contact avec le matériau support 2. On note ainsi qu'il subsiste après fermeture du moule un premier espace vide 23 entre la coquille concave 14 et la préforme 10 est un second espace vide 24 entre le rebord 11 et la coquille convexe 13, correspondant à l'épaisseur du liseré 6 de la couche 3 stratifiée.

Lors de l'étape 109 d'injection d'un matériau synthétique thermoplastique à l'état fondu dans le premier espace vide 23, la matière injectée 15, de préférence de l'ABS, vient ramollir la préforme 10 et la plaque étroitement contre la coquille convexe 13. Le rebord 11 de la préforme 10 épouse la forme du liseré 6 et remplit l'espace vide 24 sous la pression de la matière injectée. De plus, sous l'action combinée de la pression et de la température d'injection, le produit d'étanchéité appliqué à l'étape 103 colle le rebord de la préforme au liseré 6 et contribue à former un joint étanche à l'interface entre le liseré 6 et la matière injectée 15.

On a représenté la figure 5 une coupe partielle d'un ensemble plan-vasque 19 terminé au niveau de l'interface entre la vasque 18 et le plan récepteur 1. On peut ainsi constater qu'après l'étape d'injection 109, la matière injectée 15 a rempli l'espace vide 23. Le rebord 11 de la préforme 10 a été déformé pour venir au contact de la coquille convexe 13. De ce fait, une grande partie de ce rebord 11 vient dans la continuité de la couche 3 stratifiée formant ainsi une vasque 18 affleurant au plan récepteur 1. Le reste du rebord 11 forme un décrochement 16 au-dessous du liseré de la couche stratifiée, en ménageant toutefois une zone 17 de contact entre le liseré 6 et le matériau injectée 15. Cette zone 17 de contact permet de réaliser une excellente étanchéité entre la vasque 18 et le plan récepteur 1.

Bien entendu, cette description est donnée à titre d'exemple illustratif uniquement et l'homme du métier pourra y apporter de nombreuses modifications sans sortir de la portée de l'invention, comme par exemple rajouter certaines opérations intermédiaires telles que perçage, étiquetage, emballage, etc.

## Revendications

1. Procédé de réalisation d'un ensemble plan-vasque (19), dans lequel :
- on réalise une découpe (4) dans un plan récepteur (1) comportant une couche épaisse d'un matériau support (2) recouvert sur au moins une face d'une couche mince de matériau stratifié, dite couche (3) stratifiée, ladite découpe s'opérant dans le matériau support suivant un contour d'une vasque et laissant subsister un liséré (6) de couche stratifiée en surplomb vers l'intérieur de la découpe,
- on utilise un moule d'injection comportant deux parties de forme complémentaire, une première partie, dite coquille concave (14), comportant au moins une partie en creux propre à former une surface externe convexe de la vasque et une seconde partie, dite coquille convexe (13) propre à former une surface interne concave de la vasque, ledit moule étant adapté pour recevoir et serrer le plan récepteur (1) entre les deux coquilles, la couche (3) stratifiée du plan récepteur en regard de la coquille convexe (13),
**caractérisé en ce que** :
- on réalise, à partir d'une feuille mince de matériau(x) synthétique(s) thermoplastique(s), dit film décor (9), une préforme (10) de la vasque comportant un rebord (11) plan le long de son contour, vers l'extérieur de la préforme, ledit rebord présentant une largeur inférieure à la largeur du liséré (6) de couche stratifiée,
- on installe la préforme (10) et le plan récepteur dans le moule en respectant l'ordre suivant : coquille concave (14), préforme (10), plan récepteur (1), coquille convexe (13), de façon à ce que la préforme soit insérée dans la découpe (4) ménagée dans le matériau support et que le rebord (11) plan de la préforme vienne au contact du liséré (6) de couche stratifiée,
- on referme le moule et on injecte un second matériau synthétique thermoplastique, dit matériau injecté (15), entre la coquille concave et la préforme.

2. Procédé selon la revendication 1, **caractérisé en ce qu'**on emploie un film décor (9) constitué d'une feuille comportant au moins deux couches de matériaux synthétiques thermoplastiques dont au moins une première couche (20) est constituée d'un matériau transparent.

3. Procédé selon la revendication 2, **caractérisé en ce qu'**on emploie un film décor (9) comportant une deuxième couche (21) de matériau synthétique thermoplastique, réalisée dans le même matériau que le matériau injecté (15).

4. Procédé selon l'une quelconque des revendications 2 à 3, **caractérisé en ce que** la première couche (20) comporte un décor (22) pré imprimé sur sa face en regard de la deuxième couche (21).

5. Procédé selon l'une quelconque des revendications 1 à 4, **caractérisé en ce que** la préforme (10) est réalisée par thermoformage d'un film décor (9) d'épaisseur comprise entre 0,5 et 1,5 millimètres.

6. Procédé selon la revendication 5, **caractérisé en ce que** le thermoformage est réalisé dans le moule d'injection, avant installation du plan récepteur (1).

7. Procédé selon l'une quelconque des revendications 1 à 6, **caractérisé en ce que** le rebord (11) de la préforme (10) comporte des languettes (12) radiales s'étendant dans le plan du rebord, régulièrement réparties sur le contour de la préforme, et de longueur adaptée pour venir au contact du chant (5) de la découpe (4) du plan récepteur.

8. Procédé selon l'une quelconque des revendications 1 à 7, **caractérisé en ce qu'**on réalise la découpe (4) dans le plan récepteur de manière à ce que le chant (5) de la découpe présente une inclinaison (α) de cinq à quinze degrés et préférentiellement de dix degrés vers l'extérieur du contour en partant de la couche (3) stratifiée.

9. Procédé selon l'une quelconque des revendications 1 à 8, **caractérisé en ce que** la découpe laisse subsister un liséré (6) de couche stratifiée présentant une largeur de trois à dix millimètres et préférentiellement de cinq millimètres.

10. Procédé selon l'une quelconque des revendications 1 à 9, **caractérisé en ce que** la découpe (4) réalisée dans le plan récepteur (1) présente une profondeur adaptée pour éliminer toute trace de matériau support (2) sur le liséré (6) de couche (3) stratifiée.

11. Procédé selon l'une quelconque des revendications 1 à 10, **caractérisé en ce qu'**on réalise, après l'opération de découpe (101), une opération d'application (103) d'un produit d'étanchéité sur le liseré de la couche stratifiée et le chant (5) de la découpe.

12. Procédé selon l'une quelconque des revendications 1 à 11, **caractérisé en ce que** on installe la préforme (10) dans la coquille concave (14), on installe le plan récepteur (1) au-dessus de la préforme et lors de la fermeture du moule d'injection, on plaque la préforme sur la coquille convexe (13) par aspiration au travers de canaux d'aspiration ménagés dans la coquille convexe et que l'on maintient cette aspiration pendant l'injection du matériau thermoplastique entre la préforme (10) et la coquille concave (14).

13. Procédé selon l'une quelconque des revendications 1 à 12, **caractérisée en ce que** la préforme (10) est fixée sur le plan récepteur (1) avant installation de celui-ci dans le moule.

14. Ensemble monobloc, dit plan-vasque (19), comprenant :
- un plan récepteur (1) comportant une couche épaisse d'un matériau support (2) recouvert sur au moins une face d'une couche mince de matériau stratifié, dite couche (3) stratifiée ;
- une vasque (18) surmoulée sur un chant (5) d'une découpe (4) ménagée dans le plan récepteur,
**caractérisé en ce que** ladite vasque comporte au moins une première couche superficielle, dite préforme (10), d'au moins un premier matériau synthétique thermoplastique affleurant la couche (3) stratifiée du plan récepteur, et une seconde couche d'un second matériau synthétique thermoplastique, dit matériau injecté (15), supportant la préforme (10) et ancrée dans le chant (5) de la découpe du plan récepteur.

## Patentansprüche

1. Verfahren zum Herstellen eines Waschtisches (19), wobei:
- man einen Ausschnitt (4) in eine Aufnahmeplatte (1), eine dicke Schicht aus einem Trägermaterial (2) umfassend, durchführt, die auf zumindest einer Seite mit einem dünnen Schichtmaterial bedeckt ist, die Laminatschicht (3) genannt wird, wobei der besagte Ausschnitt im Trägermaterial entlang einer Kontur eines Waschbeckens erfolgt, und man eine Umrandung (6) der Laminatschicht bestehen lässt, die ins Innere des Ausschnitts übersteht,
- man eine Einspritzform, zwei Abschnitte in ergänzender Form umfassend, verwendet, wobei ein erster Abschnitt, der konkave Schale (14) genannt wird, zumindest einen hohlen Abschnitt umfasst, der sich dazu eignet, eine äußere konvexe Oberfläche des Waschbeckens zu bilden, und ein zweiter Abschnitt, der konvexe Schale (13) genannt wird, und sich dazu eignet, eine innere konkave Oberfläche des Waschbeckens zu bilden, wobei die besagte Form ausgeführt ist, um die Aufnahmeplatte (1) zwischen den beiden Schalen aufzunehmen und zu spannen, wobei sich die Laminatschicht (3) der Aufnahmeplatte gegenüber der konvexen Schale (13) befindet,
**dadurch gekennzeichnet, dass**:
- man aus einer dünnen Folie eines thermoplastischen synthetischen Materials oder thermoplastischer synthetischer Materialien, die Dekofolie (9) genannt wird, einen Rohling (10) des Waschbeckens erzeugt, der einen ebenen Rand (11) entlang seiner Kontur in Richtung außerhalb des Rohlings umfasst, wobei der besagte Rand eine Breite aufweist, die kleiner ist, als die Breite der Umrandung (6) aus der Laminatschicht,
- man den Rohling (10) und die Aufnahmeplatte in die Form einsetzt und dabei die folgende Reihenfolge beachtet: konkave Schale (14), Rohling (10), Aufnahmeplatte (1), konvexe Schale (13), sodass der Rohling in den Ausschnitt (4) eingesetzt wird, der im Trägermaterial ausgeführt ist, und der ebene Rand (11) des Rohlings in Berührung mit der Umrandung (6) aus der Laminatschicht kommt,
- man die Form verschließt und man ein zweites thermoplastisches synthetisches Material, das Einspritzmaterial (15) genannt wird, zwischen die konkave Schale und den Rohling einspritzt.

2. Verfahren nach Anspruch 1, **dadurch gekennzeichnet, dass** man eine Dekofolie (9) verwendet, die aus einem Blatt besteht, das zumindest zwei Schichten thermoplastischer synthetischer Materialien umfasst, von denen zumindest eine erste Schicht (20) aus einem durchsichtigen Material gebildet wird.

3. Verfahren nach Anspruch 2, **dadurch gekennzeichnet, dass** man eine Dekofolie (9) verwendet, die eine zweite Schicht (21) eines thermoplastischen synthetischen Materials umfasst, die aus demselben Material gefertigt ist, wie das Einspritzmaterial (15).

4. Verfahren nach irgendeinem der Ansprüche 2 bis 3, **dadurch gekennzeichnet, dass** die erste Schicht (20) eine vorgedruckte Dekoration (22) auf der Seite gegenüber der zweiten Schicht (21) umfasst.

5. Verfahren nach irgendeinem der Ansprüche 1 bis 4, **dadurch gekennzeichnet, dass** der Rohling (10) durch Tiefziehen einer Dekorationsfolie (9) in einer Stärke zwischen 0,5 und 1,5 Millimetern erzeugt wird.

6. Verfahren nach Anspruch 5, **dadurch gekennzeichnet, dass** das Tiefziehen in der Einspritzform vor dem Einlegen der Aufnahmeplatte (1) erfolgt.

7. Verfahren nach irgendeinem der Ansprüche 1 bis 6, **dadurch gekennzeichnet, dass** der Rand (11) des Rohlings (10) radiale Laschen (12) umfasst, die sich über die Ebene des Randes erstrecken, und gleichförmig auf der Kontur des Rohlings verteilt sind, und in einer Länge ausgeführt sind, die sich dazu eignet, um in Berührung mit der Kante (5) des Ausschnitts (4) der Aufnahmeplatte zu kommen.

8. Verfahren nach irgendeinem der Ansprüche 1 bis 7, **dadurch gekennzeichnet, dass** man den Ausschnitt (4) in der Aufnahmeplatte derart ausführt, dass die Kante (5) des Ausschnitts eine Neigung (α) von fünf bis fünfzehn Grad, und vorzugsweise von zehn Grad in Richtung Außenseite der Kontur, ausgehend von der Laminatschicht (3) aufweist.

9. Verfahren nach irgendeinem der Ansprüche 1 bis 8, **dadurch gekennzeichnet, dass** der Ausschnitt eine Umrandung (6) aus einer Laminatschicht mit einer Breite von drei bis zehn Millimetern, und vorzugsweise von fünf Millimetern bestehen lässt.

10. Verfahren nach irgendeinem der Ansprüche 1 bis 9, **dadurch gekennzeichnet, dass** der Ausschnitt (4), der in der Trägerplatte (1) erzeugt wird, eine Tiefe aufweist, die sich dazu eignet, um alle Spuren des Trägermaterials (2) auf der Umrandung (6) aus der Laminatschicht (3) zu eliminieren.

11. Verfahren nach irgendeinem der Ansprüche 1 bis 10, **dadurch gekennzeichnet, dass** man nach dem Vorgang des Ausschneidens (101) einen Vorgang zum Anbringen (103) eines Dichtmittels auf der Umrandung der Laminatschicht und der Kante (5) des Ausschnitts durchführt.

12. Verfahren nach irgendeinem der Ansprüche 1 bis 11, **dadurch gekennzeichnet, dass** man den Rohling (10) in die konkave Schale (14) einsetzt, man die Aufnahmeplatte (1) über dem Rohling einsetzt und man beim Schließen der Einspritzform den Rohling durch Ansaugen durch die Saugkanäle, die in der konvexen Schale angeordnet sind, auf die konvexe Schale (13) drückt, und dass man diese Saugwirkung während des Einspritzens des thermoplastischen Materials zwischen den Rohling (10) und die konkave Schale (14) beibehält.

13. Verfahren nach irgendeinem der Ansprüche 1 bis 12, **dadurch gekennzeichnet, dass** der Rohling (10) auf der Aufnahmeplatte (1) befestigt wird, bevor diese in die Form eingesetzt wird.

14. Einteilige Baugruppe, die Waschtisch (19) genannt wird, folgendes umfassend:
- eine Aufnahmeplatte (1), eine dicke Schicht aus einem Trägermaterial (2) umfassend, die auf zumindest einer Seite mit einem dünnen Schichtmaterial bedeckt ist, die Laminatschicht (3) genannt wird;
- ein auf eine Kante (5) eines Ausschnittes (4) aufgeformtes Waschbecken (18), das auf der Aufnahmeplatte angeordnet ist,
**dadurch gekennzeichnet, dass** das besagte Waschbecken zumindest eine erste oberflächliche Schicht umfasst, die Rohling (10) genannt wird, aus zumindest einem ersten thermoplastischen synthetischen Material, das die Laminatschicht (3) der Aufnahmeplatte leicht berührt, und eine zweite Schicht aus einem zweiten thermoplastischen synthetischen Material, das Einspritzmaterial (15) genannt wird, das den Rohling (10) trägt, und in der Kante (5) des Ausschnitts der Aufnahmeplatte verankert ist.

## Claims

1. Method for producing a vanity unit assembly (19), in which:
- a cutout (4) is made in a receiving surface (1) comprising a thick layer of a support material (2) covered on at least one face with a thin layer of laminated material, named the laminated layer (3), said cutout being made in the support material according to a contour of a basin and leaving a border (6) of the laminated layer overhanging toward the inside of the cutout,
- an injection mold is used, comprising two parts of complementary shape, a first part, named the concave shell (14), comprising at least one recessed part suitable for forming a convex outer surface of the basin and a second part, named the convex shell (13) suitable for forming a concave inner surface of the basin, said mold being adapted to receive and clamp the receiving surface (1) between the two shells, the laminated layer (3) of the receiving surface facing the convex shell (13),
**characterized in that**:
- a preform (10) of the basin is made from a thin sheet of thermoplastic synthetic material(s), named the decorative film (9), the preform comprising a planar rim (11) along its contour, toward the outside of the preform, said rim having a width smaller than the width of the border (6) of the laminated layer,
- the preform (10) and the receiving surface are installed in the mold in the following order: concave shell (14), preform (10), receiving surface (1), convex shell (13), so that the preform is inserted into the cutout (4) formed in the support material and that the planar rim (11) of the preform comes into contact with the border (6) of the laminated layer,
- the mold is closed and a second thermoplastic synthetic material, named the injected material (15), is injected between the concave shell and the preform.

2. Method as claimed in claim 1, **characterized in that** a decorative film (9) is employed which is formed by a sheet comprising at least two layers of thermoplastic synthetic materials, at least a first layer (20) of which is formed by a transparent material.

3. Method as claimed in claim 2, **characterized in that** a decorative film (9) is employed which comprises a second layer (21) of thermoplastic synthetic material made of the same material as the injected material (15).

4. Method as claimed in either one of claims 2 to 3, **characterized in that** the first layer (20) comprises a preprinted decoration (22) on its face facing the second layer (21).

5. Method as claimed in any one of claims 1 to 4, **characterized in that** the preform (10) is produced by thermoforming of a decorative film (9) having a thickness of between 0.5 and 1.5 millimeters.

6. Method as claimed in claim 5, **characterized in that** the thermoforming is performed in the injection mold before installation of the receiving surface (1).

7. Method as claimed in any one of claims 1 to 6, **characterized in that** the rim (11) of the preform (10) comprises radial tabs (12) extending in the plane of the rim, evenly distributed over the contour of the preform, and of a length adapted to come into contact with the edge (5) of the cutout (4) of the receiving surface.

8. Method as claimed in any one of claims 1 to 7, **characterized in that** the cutout (4) is made in the receiving surface in such a way that the edge (5) of the cutout has an inclination (α) of five to fifteen degrees and preferably of ten degrees toward the outside of the contour starting from the laminated layer (3).

9. Method as claimed in any one of claims 1 to 8, **characterized in that** the cutout leaves a border (6) of the laminated layer having a width of three to ten millimeters and preferably of five millimeters.

10. Method as claimed in any one of claims 1 to 9, **characterized in that** the cutout (4) made in the receiving surface (1) has a depth adapted to eliminate any trace of support material (2) on the border (6) of the laminated layer (3).

11. Method as claimed in any one of claims 1 to 10, **characterized in that**, after the cutting-out operation (101), there is performed an operation for application (103) of a sealing product to the border of the laminated layer and the edge (5) of the cutout.

12. Method as claimed in any one of claims 1 to 11, **characterized in that** the preform (10) is installed in the concave shell (14), the receiving surface (1) is installed above the preform and upon the closure of the injection mold, the preform is pressed against the convex shell (13) by suction through suction channels formed in the convex shell and this suction is maintained during the injection of the thermoplastic material between the preform (10) and the concave shell (14).

13. Method as claimed in any one of claims 1 to 12, **characterized in that** the preform (10) is fixed to the receiving surface (1) before installation of the latter in the mold.

14. Monobloc assembly, named the vanity unit (19), comprising:
- a receiving surface (1) comprising a thick layer of a support material (2) covered on at least one face with a thin layer of laminated material, named the laminated layer (3);
- a basin (18) molded onto an edge (5) of a cutout (4) formed in the receiving surface,
**characterized in that** said basin comprises at least one first surface layer, named the preform (10), of at least one first thermoplastic synthetic material flush with the laminated layer (3) of the receiving surface, and a second layer of a second thermoplastic synthetic material, named the injected material (15), supporting the preform (10) and anchored in the edge (5) of the cutout of the receiving surface.
